# EUROPEAN PATENT APPLICATION

(11) **EP 4 804 377 A1**
(43) Date of publication of application: **09.09.2026**
(21) Application number: 24892918.4
(22) Date of filing: 15.08.2024
(51) Int. Cl.: H02J 7/34, H02J 7/00

(54) **ENERGY STORAGE CIRCUIT AND CONTROL METHOD FOR CONTROL DEVICE OF AIR CONDITIONER, DEVICE, AND STORAGE MEDIUM**

(30) Priority: 24.11.2023 CN 202311585019
(71) Applicant: Foshan Shunde Midea Electric Science and Technology Co., Ltd., Foshan, Guangdong 528300 (CN); GD Midea Air-Conditioning Equipment Co., Ltd., Foshan, Guangdong 528311 (CN)
(72) Inventor: CAI, Weijie, Foshan, Guangdong 528300 (CN); DENG, Gucheng, Foshan, Guangdong 528300 (CN)
(74) Representative: Ran, Handong
(86) International application number: PCT/CN2024/112535
(87) International publication number: WO 2025/107756

(57) **Abstract**

The present application discloses an energy storage circuit and control method for a control device of an air conditioner, a device, and a storage medium. The control device of the air conditioner comprises: a controller and a power supply circuit, wherein the power supply circuit is used for converting an external power supply power supply and then supplying power to the controller; the energy storage circuit is arranged between an output end of the power supply circuit and a power supply end of the controller; the energy storage circuit comprises: a super capacitor switching circuit and a charging circuit, wherein the super capacitor switching circuit comprises multiple super capacitors and a switching device, the switching device comprises a switching circuit arranged between two adjacent super capacitors and is used for controlling the multiple super capacitors to be switched between a first connection state and a second connection state, the first connection state is that the multiple super capacitors are connected in parallel, and the second connection state is that the multiple super capacitors are connected in series; and an output end of the charging circuit is connected to an input end of the super capacitor switching circuit and is used for charging the super capacitors.

## Description

### CROSS-REFERENCE TO RELATED APPLICATION

This application claims priority to Chinese Patent Application No. 202311585019.2, filed on November 24, 2023, the disclosure of which is hereby incorporated by reference in its entirety.

### TECHNICAL FIELD

The present application relates to the field of control technology, and in particular to an energy storage circuit for a control apparatus of an air conditioner, a control method, a device and a storage medium.

### BACKGROUND

At present, as a new type of an energy storage device, a supercapacitor has been widely used in many fields because of its characteristics of a high power density and long cycle life.

However, in the related art, when the supercapacitor is charged, a switching power supply is generally adopted to charge the supercapacitor. However, since an output current of the switching power supply is limited, a charging efficiency of the supercapacitor will be slow.

### SUMMARY

In view of this, embodiments of the present application provides an energy storage circuit for a control apparatus of an air conditioner, a control method, a device and a storage medium, which aim at improving a charging efficiency of a supercapacitor.

The technical solutions of the embodiments of the present application are implemented as follows.

According to a first aspect, an embodiment of the present application provides an energy storage circuit for a control apparatus of an air conditioner. The control apparatus of the air conditioner includes a controller and a power supply circuit. The power supply circuit is configured to convert an external power supply and then supply power to the controller. The energy storage circuit is arranged between an output end of the power supply circuit and a power supply end of the controller. The energy storage circuit includes a supercapacitor switching circuit and a charging circuit.

The supercapacitor switching circuit includes a plurality of supercapacitors and a switching apparatus.

The switching apparatus includes a switching circuit arranged between any two adjacent supercapacitors of the plurality of supercapacitors, and is configured to control the plurality of supercapacitors to switch between a first connection state in which the plurality of supercapacitors are connected in parallel and a second connection state in which the plurality of supercapacitors are connected in series.

An output end of the charging circuit is connected to an input end of the supercapacitor switching circuit, and the charging circuit is configured to charge each of the plurality of supercapacitors.

In some embodiments, the energy storage circuit further includes a discharging circuit.

An input end of the discharging circuit is connected to an output end of the supercapacitor switching circuit, and the discharging circuit is configured to boost an output voltage of the supercapacitor switching circuit and then discharge.

In some embodiments, the energy storage circuit further includes a current detection control circuit.

An output end of the current detection circuit is connected to an input end of the charging circuit, and the current detection circuit is configured to detect a current value of the circuit and generate charging indication information according to the current value, in which the charging indication information is configured to control turning on of the charging circuit.

In some embodiments, the switching circuit includes a switch element.

The switch element includes a first fixed contact, a second fixed contact, a first movable contact, a second movable contact, a third movable contact and a fourth movable contact.

The first fixed contact is connected to a first end of a first supercapacitor, and the second fixed contact is connected to a second end of the first supercapacitor.

The first movable contact is disconnected from a second supercapacitor, the second movable contact and the third movable contact are connected to a first end of the second supercapacitor, and the fourth movable contact is connected to a second end of the second supercapacitor.

The second supercapacitor is arranged adjacent to the first supercapacitor, the first connection state is a connection state in which the first fixed contact is connected to the second movable contact and the second fixed contact is connected to the fourth movable contact, and the second connection state is a connection state in which the first fixed contact is connected to the first movable contact and the second fixed contact is connected to the third movable contact.

According to a second aspect, an embodiment of the present application provides a control method applied to the energy storage circuit described in the first aspect. The method includes the following operations.

Charging indication information is acquired.

A control signal is generated according to the charging indication information and a first set threshold.

The control signal is a first control signal configured to control the switching apparatus to switch to the second connection state or a second control signal configured to control the switching apparatus to switch to the first connection state.

In some embodiments, the operation that the control signal is generated according to the charging indication information and the first set threshold includes the following operations.

The first control signal is generated according to the charging indication information and a first voltage value is acquired, in which the first voltage value is an output voltage value of the supercapacitor switching circuit.

It is determined that the first voltage value is greater than or equal to the first set threshold, and the second control signal is generated.

The first set threshold is a maximum voltage value at which each of the plurality of supercapacitors in the supercapacitor switching circuit is chargeable.

In some embodiments, the method further includes the following operations.

Discharging indication information is acquired.

A second voltage value is acquired according to the discharging indication information, in which the second voltage value is an output voltage value of the supercapacitor switching circuit.

It is determined whether the second voltage value is greater than or equal to a second set threshold, and the first control signal is generated if the second voltage value is greater than or equal to the second set threshold.

The second control signal is generated if the second voltage value is less than the second set threshold.

The second set threshold is a voltage value of the supercapacitor switching circuit corresponding to a maximum duty cycle of the discharging circuit.

According to a third aspect, an embodiment of the present application provides a control apparatus applied to the supercapacitor control circuit described in the first aspect. The control apparatus includes an acquisition component and a generation mode.

The acquisition component is configured to acquire an operation parameter value in an operation mode of the energy storage circuit. The operation mode includes a charging mode.

The generation mode is configured to generate a control signal according to the operation parameter value in the charging mode and a first set threshold.

The control signal is a first control signal configured to control the switching apparatus to switch to the second connection state or a second control signal configured to control the switching apparatus to switch to the first connection state.

According to a fourth aspect, an embodiment of the present application provides an electronic device including the energy storage circuit according to the first aspect. The electronic device further includes a processor and a memory for storing computer programs executable on the processor.

The processor is configured to execute operations of the method according to the first aspect when running the computer programs.

According to a fifth aspect, an embodiment of the present application provides a computer storage medium having stored thereon computer programs that when executed by a processor, perform operations of the method according to the first aspect.

The technical solution of an embodiment of the present application provides an energy storage circuit for a control apparatus of an air conditioner. The control apparatus of the air conditioner includes a controller and a power supply circuit. The power supply circuit is configured to convert an external power supply and then supply power to the controller. The energy storage circuit is arranged between an output end of the power supply circuit and a power supply end of the controller. The energy storage circuit includes a supercapacitor switching circuit and a charging circuit, and the supercapacitor switching circuit includes a plurality of supercapacitors and a switching apparatus. The switching apparatus includes a switching circuit arranged between any two adjacent supercapacitors of the plurality of supercapacitors, and is configured to control the plurality of supercapacitors to switch between a first connection state in which the plurality of supercapacitors are connected in parallel and a second connection state in which the plurality of supercapacitors are connected in series. An output end of the charging circuit is connected to an input end of the supercapacitor switching circuit, and the charging circuit is configured to charge each of the plurality of supercapacitors. In this way, the plurality of supercapacitors are controlled to switch between the first connection state and the second connection state by the switching apparatus, which can increase the charging current of the supercapacitor, and accelerate the charging speed of the supercapacitor, thereby increasing the charging rate of the supercapacitor.

### BRIEF DESCRIPTION OF THE DRAWINGS

FIG. 1 is a schematic diagram of an energy storage circuit for a control apparatus of an air conditioner according to an embodiment of the present application.
FIG. 2 is a schematic diagram of a switching circuit according to an embodiment of the present application.
FIG. 3 is a flow chart of a control method according to an embodiment of the present application.
FIG. 4 is a schematic diagram of a supercapacitor circuit according to an embodiment of the present application.
FIG. 5 is a schematic diagram of a supercapacitor switching circuit according to an application example of the present application.
FIG. 6 is a schematic diagram of a BUCK charging circuit according to an application example of the present application.
FIG. 7 is a schematic diagram of a BOOST discharging circuit according to an application example of the present application.
FIG. 8 is a schematic diagram of a current detection circuit according to an application example of the present application.
FIG. 9 is a schematic flow chart of charging and discharging of a supercapacitor according to an application example of the present application.
FIG. 10 is a schematic diagram of a control apparatus according to an embodiment of the present application.
FIG. 11 is a schematic diagram of an electronic device according to an embodiment of the present application.

### DETAILED DESCRIPTION

The present application will be further described below in combination with the accompanying drawings and the embodiments.

Unless defined otherwise, all technical and scientific terms used herein have the same meaning as commonly understood by those skilled in the art to which the present application belongs. The terms used herein in the specification of the present application are for the purpose of describing specific embodiments only and are not intended to limit the present application.

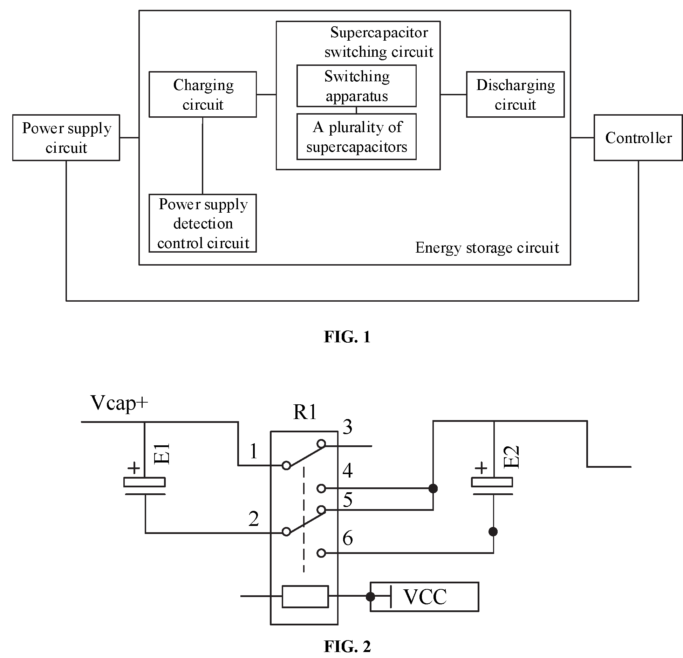

An embodiment of the present application provides an energy storage circuit for a control apparatus of an air conditioner. As shown in FIG. 1, the control apparatus of the air conditioner includes a controller and a power supply circuit. The power supply circuit is configured to convert an external power supply and then supply power to the controller. The energy storage circuit is arranged between an output end of the power supply circuit and a power supply end of the controller. The energy storage circuit includes a supercapacitor switching circuit and a charging circuit, and the supercapacitor switching circuit includes a plurality of supercapacitors and a switching apparatus.

It can be understood that the supercapacitor, as an energy storage element, has the characteristics of a large capacity and a low withstand voltage. Generally, in order to improve the energy storage capacity of supercapacitors, a plurality of supercapacitors are used simultaneously.

It can be understood that, the switching apparatus includes a switching circuit arranged between any two adjacent supercapacitors, and is configured to control the plurality of supercapacitors to switch between a first connection state in which the plurality of supercapacitors are connected in parallel and a second connection state in which the plurality of supercapacitors are connected in series. For example, when the plurality of supercapacitors are in the first connection state in which the plurality of supercapacitors are connected in parallel, the plurality of supercapacitors have the same current. If the total current of the current is I and the number of the plurality of supercapacitors is n, the current value of each supercapacitor is I/n in the parallel connection state. Generally speaking, in order to ensure the stability of the circuit, the plurality of supercapacitors are connected in parallel.

For example, when the plurality of supercapacitors are in the second connection state in which the plurality of supercapacitors are connected in series, the plurality of supercapacitors have the same current. If the total current of the current is I and the number of the plurality of supercapacitors is n, the current value of each supercapacitor is I in the series connection state. In the series state, the current of each supercapacitor can be improved.

It can be understood that an output end of the charging circuit is connected to an input end of the supercapacitor switching circuit, and the charging circuit is configured to charge each supercapacitor. The charging circuit includes a BUCK circuit, which is a buck-type DC-DC converter which realizes the voltage conversion and the constant current output by switching current magnetic field lines. It controls the output voltage by controlling the on-off time of a PWM switch tube, to control the output current.

In this way, the plurality of supercapacitors are controlled to switch between the first connection state and the second connection state by the switching apparatus, which can increase the charging current (for example, switching from the first connection state to the second connection state) of the supercapacitor, and accelerate the charging speed of the supercapacitor, thereby increasing the charging rate of the supercapacitor.

In some embodiments, with reference to FIG. 1, the energy storage circuit further includes a discharging circuit.

An input end of the discharging circuit is connected to an output end of the supercapacitor switching circuit, and the discharging circuit is configured to boost an output voltage of the supercapacitor switching circuit and then discharge.

It will be understood that the discharging circuit is configured to boost the output voltage of the supercapacitor switching circuit and then discharge. The discharging circuit includes a voltage-boosting circuit. The voltage-boosting circuit here can be a Boost circuit. The Boost circuit is a switched direct current voltage-boosting circuit, which can make the output voltage higher than the input voltage. Generally speaking, a target voltage required by a power supply device is higher than a capacitance voltage of each supercapacitor. Therefore, the output end of the supercapacitor switching circuit is connected to the input end of the discharging circuit, and after each supercapacitor is discharged, the discharging circuit boosts a discharging voltage of each supercapacitor and outputs it to the power supply device.

In some embodiments, the energy storage circuit further includes a current detection control circuit.

An output end of the current detection circuit is connected to an input end of the charging circuit, and the current detection circuit is configured to detect a current value of the circuit and generate charging indication information according to the current value, in which the charging indication information is configured to control turning on of the charging circuit.

It can be understood that the current detection control circuit is configured to detect the current value of the circuit, compare the current value with a set current threshold in case that the circuit is powered off, and generate charging indication information for controlling turning on of the charging circuit if the current value is less than or equal to the current threshold. At this time, the charging circuit charges each supercapacitor.

In this way, the current detection control circuit controls turning on of the charging circuit, that is, the magnitude of the current value ensures whether the charging circuit is turned on at this time, which improves the charging efficiency of the charging circuit and ensures the stability of the circuit.

In some embodiments, FIG. 2 is a schematic diagram of a switching circuit. As shown in FIG. 2, the switching circuit includes a switch element.

The switch element includes a first fixed contact 1, a second fixed contact 2, a first movable contact 3, a second movable contact 4, a third movable contact 5 and a fourth movable contact 6.

It should be understood that the switch element includes, but is not limited to, a relay, an Insulated Gate Bipolar Transistor (IGBT), a Metal-Oxide-Semiconductor Field-Effect Transistor (MOSFET) which may also be referred to as a MOS transistor, and the like.

It can be understood that as shown in FIG. 2, R1 is the switch element, and the switching circuit is located between a first capacitor E1 and a second capacitor E2. The second supercapacitor E2 is arranged adjacent to the first supercapacitor E1.

It can be understood that the switch element R1 includes a first fixed contact 1, a second fixed contact 2, a first movable contact 3, a second movable contact 4, a third movable contact 5 and a fourth movable contact 6. The first fixed contact 1 is connected to a first end of the first supercapacitor E1, and the second fixed contact 2 is connected to a second end of the first supercapacitor E1. The first movable contact 3 is disconnected from the second supercapacitor E2. The second movable contact 4 and the third movable contact 5 are connected to a first end of the second supercapacitor E2, and the fourth movable contact 6 is connected to a second end of the second supercapacitor E2.

It can be understood that the first connection state is a connection state in which the first fixed contact 1 is connected to the second movable contact 4, and the second fixed contact 2 is connected to the fourth movable contact 6; and the second connection state is a connection state in which the first fixed contact 1 is connected to the first movable contact 3, and the second fixed contact 2 is connected to the third movable contact 5.

In this way, by controlling the connection of the first fixed contact, the second fixed contact, the third movable contact, the fourth movable contact, the fifth movable contact, and the sixth movable contact of the switch element, the flexible switching of the plurality of supercapacitors between the first connection state and the second connection state is realized.

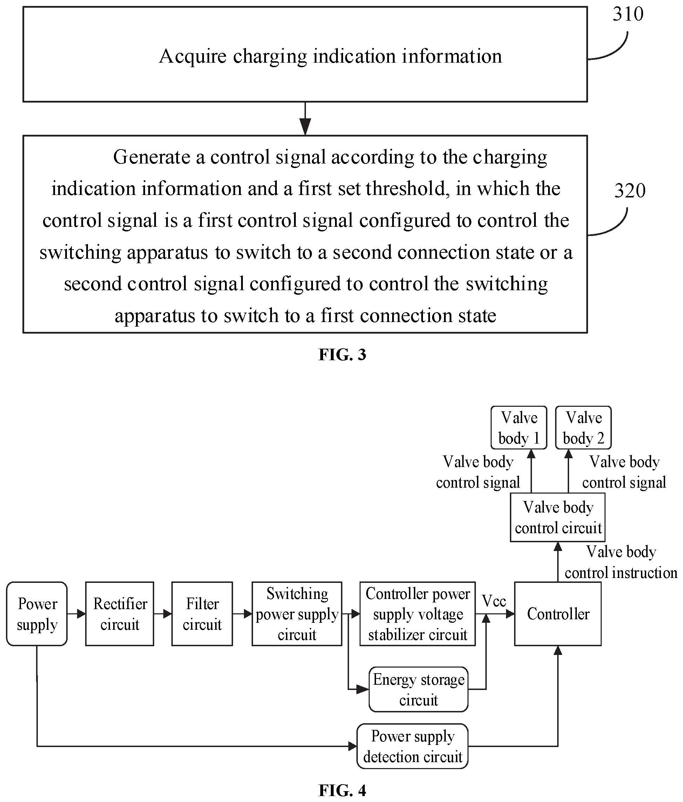

An embodiment of the present application also provides a control method. As shown in FIG. 3, the control method includes the following operations.

At operation 310, charging indication information is acquired.

Here, a control apparatus may acquire charging indication information generated by the current detection control circuit. For example, the current detection control circuit detects a current value of the circuit, compares the current value with a current threshold according to the current value, and generates charging indication information in case that the current value is small, that is, the current value is less than or equal to the current threshold, in which the charging indication information is configured to control turning on of the charging circuit. At this time, the charging circuit charges each supercapacitor in the energy storage circuit.

At operation 320, a control signal is generated according to the charging indication information and a first set threshold.

The control signal is a first control signal configured to control the switching apparatus to switch to the second connection state or a second control signal configured to control the switching apparatus to switch to the first connection state.

Here, the control signal may include a high-level signal and a low-level signal. Exemplarily, the high-level signal is the first control signal configured to control the switching apparatus to switch to the second connection state, and correspondingly, the low-level signal is the second control signal configured to control the switching apparatus to switch to the first connection state.

In this way, the control signal is generated according to the charging indication information and the first set threshold, and the control signal is the first control signal configured to control the switching apparatus to switch to the second connection state or the second control signal configured to control the switching apparatus to switch to the first connection state, which may control the switching apparatus to switch between the first connection state and the second connection state, thereby controlling the charging current of the plurality of supercapacitors, and improving the charging efficiency.

In some embodiments, the operation that the control signal is generated according to the charging indication information and the first set threshold includes the following operations.

The first control signal is generated according to the charging indication information, and a first voltage value is acquired, in which the first voltage value is an output voltage value of the supercapacitor switching circuit.

It is determined that the first voltage value is greater than or equal to the first set threshold, and the second control signal is generated.

The first set threshold is a maximum voltage value at which each supercapacitor in the supercapacitor switching circuit is chargeable.

Here, after the charging indication information is acquired, the control apparatus generates first control information and controls the switching apparatus to switch to the second connection state, that is, the series connection state. At this time, the current value of each supercapacitor is increased, thereby accelerating the charging speed of the supercapacitor, thereby increasing the charging rate of the supercapacitor.

Here, after the charging indication information is acquired, a first voltage value is acquired. The first voltage value is an output voltage value of the supercapacitor switching circuit, and the first set threshold is a maximum voltage value at which each supercapacitor in the supercapacitor switching circuit is chargeable. In case that it is determined that the first voltage value is greater than or equal to the first set threshold, indicating that each supercapacitor has been charged, a second control signal is generated, and the switching apparatus is controlled to switch to the first connection state, that is, the parallel connection state, thereby ensuring the stability of the energy storage circuit.

In some embodiments, the method further includes the following operations.

Discharging indication information is acquired.

A second voltage value is acquired according to the discharging indication information, in which the second voltage value is an output voltage value of the supercapacitor switching circuit.

It is determined whether the second voltage value is greater than or equal to a second set threshold, and the first control signal is generated if the second voltage value is greater than or equal to the second set threshold.

The second control signal is generated if the second voltage value is less than the second set threshold.

The second set threshold is a voltage value of the supercapacitor switching circuit corresponding to a maximum duty cycle of the discharging circuit.

Here, the control apparatus may also acquire the discharging indication information. The discharging indication information is configured to instruct each supercapacitor to discharge, and output a discharging voltage of each supercapacitor to a power-consuming device after being boosted by the discharging circuit. Generally speaking, a target voltage required by the power supply device is higher than the capacitance voltage of each supercapacitor. Therefore, the supercapacitor switching circuit is connected to the discharging circuit, and after each supercapacitor discharges, the discharging circuit boosts the discharging voltage of each supercapacitor and outputs it to the power supply device.

Here, the discharging circuit can be boosted based on the BOOST circuit, but the BOOST circuit is affected by its duty cycle, and when the duty cycle of the BOOST circuit reaches the limit, the BOOST circuit cannot continue to stably output the discharging voltage to the power-consuming device. However, at this time, a large amount of electricity still remains in the supercapacitor, and the voltage utilization rate of the supercapacitor is small.

Here, the second voltage value is acquired according to the discharging indication information, in which the voltage value is an output voltage value of the supercapacitor switching circuit, and the second set threshold is a voltage value of the supercapacitor switching circuit corresponding to the maximum duty cycle of the discharging circuit. It is determined whether the second voltage value is greater than or equal to the second set threshold. In case that the second voltage value is greater than or equal to the second set threshold, indicating that the duty cycle of the discharging circuit has reached the limit at this time, and the current of each supercapacitor has also reached the limit, the first control signal is generated. The first control signal is configured to control the switching apparatus to switch to the second connection state, that is, the connection state of the plurality of supercapacitors is a series connection state at this time. At this time, the voltage of each supercapacitor is increased than the original voltage, so that the power-consuming device is continuously supplied with the increased voltage, which further improves the voltage utilization rate of the supercapacitor.

Here, it is determined whether the second voltage value is greater than or equal to the second set threshold. If the second voltage value is less than the second set threshold, indicating that the discharging circuit can normally supply power to the power-consuming device at this time and the voltage utilization rate is high, that is, it is not necessary to further increase the voltage of each supercapacitor at this time, the second control signal is generated. The second control signal is configured to control the switching apparatus to switch to the first connection state, that is, the parallel connection state, to ensure the stability of the circuit.

Hereinafter, the embodiments of the present application will be described in detail with reference to an application example.

At present, the supercapacitor has the characteristics of a large capacity and a low withstand voltage. Generally, a plurality of supercapacitors are adopted in parallel to increase the capacity and energy storage capacity, but their output voltages do not meet the normal requirements for the circuit power supply. Therefore, when a supercapacitor serves as an energy storage device, it needs to use a BUCK circuit for charging, and a boost circuit for discharging.

However, when the supercapacitor charges, a switch power supply generally serves as a power supply device. The switch power supply has a limited output current capacity, a slow charging speed, a low duty cycle of BUCK circuit and a low conversion efficiency. When the supercapacitor charges, since the target voltage is much higher than the capacitance voltage, if the duty cycle of the boost circuit reaches the limit, the boost circuit can't continue to output stably. At this time, there is still a large amount of electricity left in the capacitor, and the utilization rate of the capacitance voltage is small.

Based on this, the present application example provides a supercapacitor circuit (that is, the energy storage circuit for the control apparatus of the air conditioner described above), and a control method for charging and discharging of a supercapacitor. With reference to FIG. 4, FIG. 4 is a schematic diagram of a supercapacitor circuit applied to a control apparatus of an air conditioner. In FIG. 4, the control apparatus of the air conditioner includes a controller, a controller power supply circuit (i.e., a power supply circuit), a power supply detection circuit, an energy storage circuit (i.e., a supercapacitor circuit), a valve body control circuit, and a valve body (a valve body 1 and a valve body 2). The controller power supply circuit is configured to convert an external power supply and then supply power to the controller, and the energy storage circuit (i.e., the supercapacitor circuit) is arranged between an output end of the power supply circuit and a power supply end of the controller.

Exemplarily, the controller power supply circuit is configured to supply power to the controller, and includes a power supply, a rectifier circuit, a filter circuit, a switching power supply circuit, and a controller power supply voltage stabilizer circuit. The controller power supply voltage stabilizer circuit is configured to stabilize the input voltage and then output it to the controller, and the output voltage of the controller power supply voltage stabilizer circuit is Vcc =5V & 12V. When powered on, the switching power supply circuit supplies power to a control chip through the controller power supply voltage stabilizer circuit, and the control chip can send a valve body control signal to the valve body 1 and/or the valve body 2 through the valve body control circuit, to realize the corresponding valve body operation control of the valve body 1 and/or the valve body 2.

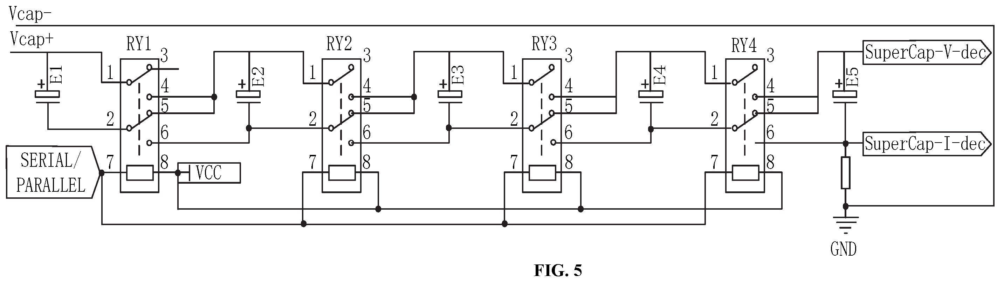

In the present application example, the supercapacitor circuit includes a supercapacitor switching circuit, a BUCK charging circuit, a BOOST discharging circuit, and a current detection control circuit. FIG. 5 is a schematic diagram of a supercapacitor switching circuit. As shown in FIG. 5, the supercapacitor switching circuit includes five supercapacitors and a switching apparatus. The five supercapacitors respectively include a first supercapacitor E1, a second supercapacitor E2, a third supercapacitor E3, a fourth supercapacitor E4, a fourth supercapacitor E5. The switching apparatus includes a switching circuit arranged between any two adjacent supercapacitors, and in the present application example, includes a switching circuit 1 between E1 and E2, a switching circuit 2 between E2 and E3, a switching circuit 3 between E3 and E4, and a switching circuit 4 between E4 and E5.

In FIG. 5, the switching circuits include relays RY1, RY2, RY3, and RY4. The relay RY1 includes a first fixed contact 1, a second fixed contact 2, a first movable contact 3, a second movable contact 4, a third movable contact 5 and a fourth movable contact 6.

The relay RY1 further includes a SERIAL/PARALLEL control signal receiving port, including a first end 7 configured to receive a control signal and a second end 8 connected to a power supply VCC.

Here, taking the switching circuit 1 between E1 and E2 as an example, the first fixed contact 1 is connected to a first end of the first supercapacitor E1, and the second fixed contact 2 is connected to a second end of the first supercapacitor E1. The second movable contact 4 and the third movable contact 5 are connected to a first end of the second supercapacitor E2, and the fourth movable contact 6 is connected to a second end of the second supercapacitor E2.

The second supercapacitor E2 is arranged adjacent to the first supercapacitor E1. Taking the switching circuit 1 between E1 and E2 as an example, when the SERIAL/PARALLEL is pulled up, the SERIAL/PARALLEL is at a high level at this time, and can be controlled to switch to a series connection state (that is, the aforementioned first connection state). The series connection state is a connection state in which the first fixed contact 1 is connected to the second movable contact 3 and the second fixed contact 2 is connected to the fourth movable contact 6. At this time, the current of each supercapacitor is increased, thereby accelerating the charging speed of the supercapacitor, thereby increasing the charging rate of the supercapacitor.

When the SERIAL/PARALLEL is pulled down, the SERIAL/PARALLEL is at a low level at this time, and can be controlled to switch to a parallel connection state (that is, the aforementioned second connection state). The parallel connection state is a connection state in which the first fixed contact 1 is connected to the first movable contact 3 and the second fixed contact 2 is connected to the third movable contact 5.

Here, the output end of the supercapacitor also includes a SuperCap-V-dec (voltage detection port) and a SuperCap-I-dec (current detection port).

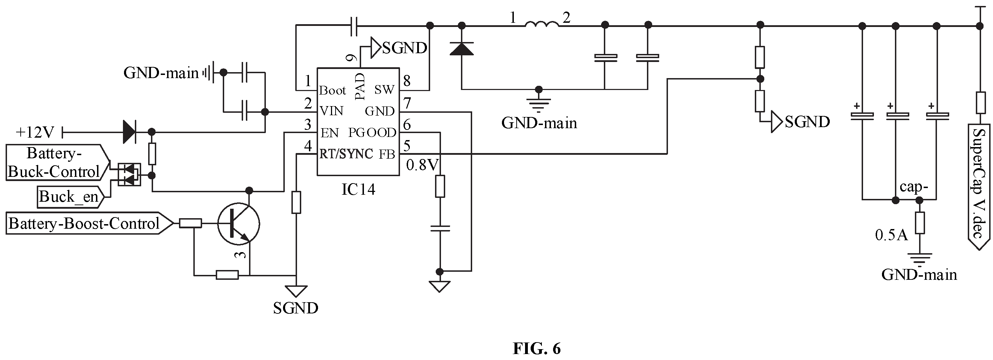

FIG. 6 is a schematic diagram of a BUCK charging circuit (that is, the aforementioned charging circuit). The output end of the charging circuit is connected to the input end of the supercapacitor switching circuit, and the charging circuit is configured to charge each supercapacitor. As shown in FIG. 5, the BUCK charging circuit includes a buck chip IC14, and the IC14 includes 9 pins, which include: a first pin BOOT (input/output pin); a second pin VIN (power input voltage pin); and a third pin EN (enable pin). Generally, the buck chip works at a high level. In FIG. 5, the EN pin is connected to a BUCK-en end, and the high and low levels of the current detection circuit can be received based on the BUCK-en end. If the high level is received, the buck chip starts to work, and the BUCK charging circuit starts to charge each supercapacitor. The high level here is the charging indication information described above.

The 9 pins further includes: a fourth pin RT/SYNC (clock pulse pin) configured to adjust the frequency of the BUCK charging circuit; a fifth pin FB (output voltage feedback pin); and a sixth pin PGOOD (open-drain output pin), in which if the output voltage exceeds the adjustment range (when the output voltage is not within plus or minus 10% of the voltage to be output) or a fault is detected, this pin is pulled low; and if the output voltage is normal, this pin outputs a high level.

The 9 pins further includes: a seventh pin GND (ground pin); an eighth pin SW (switch control pin), configured to control the opening and closing of the subsequent circuit, to control the working state of the BUCK charging circuit; and a ninth pin PAD (pad pin), in which PAD generally refers to a large metal area at the bottom of the chip, is configured for the heat dissipation, electromagnetic shielding, etc., and generally must be grounded.

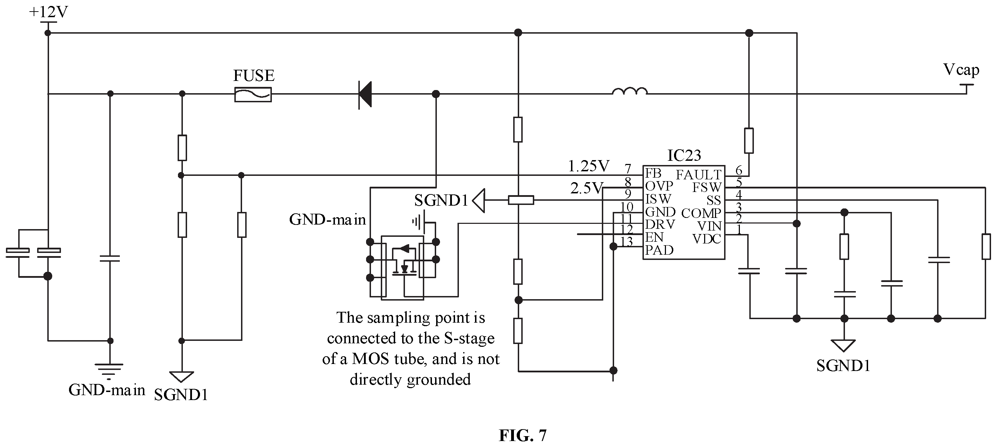

The application example also provides a BOOST discharging circuit, and FIG. 7 is a schematic diagram of the BOOST discharging circuit. The input end of the BOOST discharging circuit is connected to the output end of the supercapacitor switching circuit, and the BOOST discharging circuit is configured to boost the output voltage of the supercapacitor switching circuit and then discharge.

As shown in FIG. 7, the BOOST discharging circuit includes a boost chip IC23 on which 13 pins are arranged. The 13 pins includes: a first pin VDC (forced power-on pin); a second pin VIN (power input voltage pin); a third pin COMP (an output pin of the internal error amplifier); a fourth pin SS (soft start programming pin); a fifth pin FSW (switch pin), which can set the switching frequency of the boost chip; a sixth pin FAULT; a seventh pin FB (output voltage feedback pin); an eighth pin OVP; a ninth pin ISW; and a tenth pin GND (ground pin).

The 13 pins further includes: an eleventh pin DRV, which is externally connected to a gate driver end of a PMOS tube and can control the on-off of the PMOS, in which the sampling point is connected to the S-stage of a MOS tube, and is not directly grounded; and a twelfth pin EN (enable pin), in which the EN pin is connected to a Battery-Boost-Control end, receives a high-level signal or a low-level signal based on this end. The chip works at the high level. At this time, the BOOST discharging circuit boosts and discharges externally, that is, BOOST discharging is carried out. The chip shuts down at the low level. At this time, the BOOST discharging circuit does not carry out BOOST discharging.

The 13 pins further includes a thirteenth pin PAD (pad pin), in which PAD generally refers to a large metal area at the bottom of the chip, is configured for the heat dissipation, electromagnetic shielding, etc., and generally must be grounded.

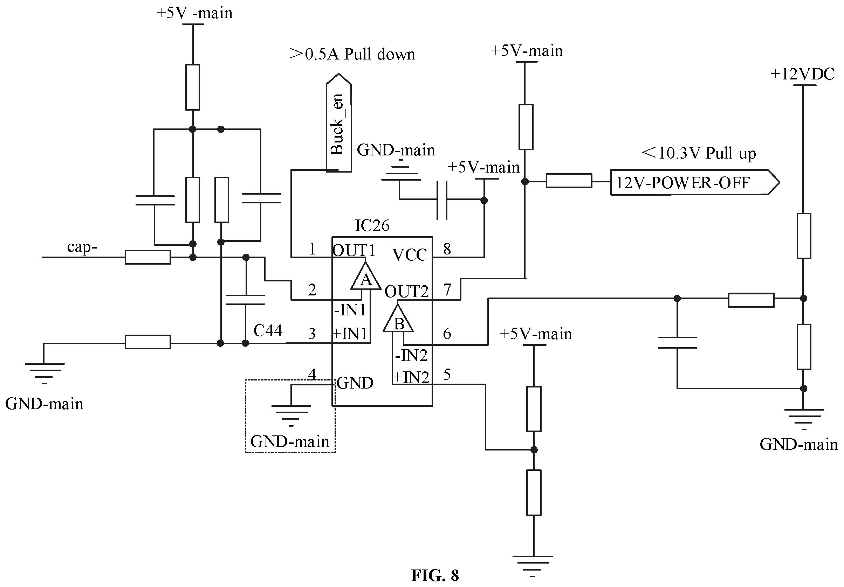

The current detection control circuit is shown in FIG. 8. An output end (BUCK en) of the current detection control circuit is connected to an output end (EN enable pin) of the BUCK charging circuit, and the current detection control circuit is configured to detect a current value of the circuit and generate charging indication information (that is, a high level) according to the current value, in which the charging indication information is configured to control turning on of the charging circuit.

The current detection circuit includes a detection chip IC26. The chip can detect the current and the voltage. The detection chip includes: a first pin 1 (OUT1) configured to output a current detection result; a second pin 2 (-IN1) configured to acquire an input current of the circuit; a third pin 3 (+ IN1) configured to acquire an input current of the circuit; and a fourth pin which is the ground pin. When the current detection result output by OUT1 is greater than 0.5A, BUCK en is pulled down, and a low-level signal is generated at this time, indicating that the BUCK charging circuit does not need to charge each supercapacitor with a constant current at this time. When the input current is less than or equal to 0.5A, the BUCK en is pulled up, and at this time, a high level signal, that is, charging indication information, is generated, to control turning on of the BUCK charging circuit. A high level is output based on the EN enable pin in the BUCK charging circuit, to control turning on of the BUCK charging circuit.

The detection chip IC26 can also be configured to detect the voltage to control the opening or closing of the external power supply. The detection chip IC26 further includes: a fifth pin (+ IN2) configured to acquire an input voltage of the circuit; a sixth pin (-IN2) configured to acquire an input voltage of the circuit; and a seventh pin (OUT1) configured to output a voltage detection result. If the voltage detection result is less than 10.3V, the end 12V-POWER-OFF is pulled up to control turning on with the external power supply. If the voltage detection result is greater than or equal to 10.3V, the end 12V-POWER-OFF is pulled down to control not turning on with the external power supply.

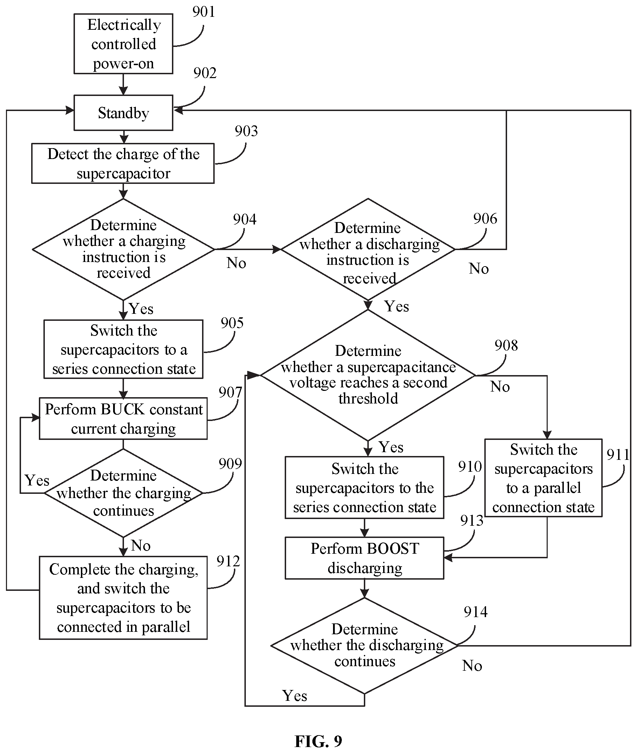

The application example provides a control method for charging and discharging of a supercapacitor. With reference to FIG. 9, the control method includes the following operations.

At operation 901, electrically controlled power-on is performed.

At operation 902, standby is performed.

At operation 903, the charge of the supercapacitor is detected.

The current detection control circuit detects a current value of the circuit, compares the current value with a set current threshold, and generates charging indication information in case that the current value is less than or equal to the set current threshold. The charging indication information is transmitted to the BUCK-en end of the BUCK charging circuit based on the BUCK en end in the current detection circuit, and the charging indication information is configured to control turning on of the charging circuit. If the current value is greater than the set current threshold, the charging indication information is not generated, in which the set current threshold here may be 0.5 A.

At operation 904, it is determined whether a charging instruction is received.

If the charging instruction is received, operation 905 is executed. If the charging instruction is not received, operation 906 is executed.

At operation 905, the supercapacitors are switched to a series connection state.

The switch power supply outputs a VCC (+12V) voltage, which is bucked (BUCK) to charge the supercapacitors E1-E5 with a constant current I. Due to the limited output current capacity of the switch power supply, if five capacitors are connected in parallel, the charging speed will be slow, and the charging current of each capacitor is 1/5*I.

It is determined that the charging indication information is acquired, and a first control signal is generated according to the charging indication information, in which the first control signal is configured to control the switching apparatus to switch to the series connection state. Specifically, in case that the switching apparatus receives the first control signal, the SERIAL/PARALLEL signal is pulled up (RY1-RY4 are disconnected), the five capacitors are connected in series, the charging current of each capacitor is I, and the charging time is 1/5 of the original charging time, thereby improving the charging speed and the charging efficiency.

After the switching is completed, operation 907 is executed.

At operation 906, it is determined whether a discharging instruction is received.

If it is determined that the current detection circuit does not generate the charging indication information, it is determined whether the discharging instruction is received.

If the discharging instruction is received, operation 908 is executed. If the discharging instruction is not received, operation 902 is executed.

At operation 907, BUCK constant current charging is performed.

In case that the switching apparatus is controlled to switch to the series connection state, BUCK constant current charging of the plurality of supercapacitors is performed, a first voltage value, which is an output voltage value of the supercapacitor switching circuit, is acquired in real time based on SuperCap-V-dec, and operation 909 is executed.

At operation 908, it is determined whether a supercapacitance voltage reaches a second threshold.

After it is determined that the discharging instruction is acquired, it is determined whether the capacitance voltage (that is, the second voltage value described above) reaches a second set threshold, in which the second set threshold is the voltage value of the supercapacitor switching circuit corresponding to the maximum duty cycle of the discharging circuit. If the capacitance voltage reaches the second set threshold, operation 910 is executed. If the capacitance voltage does not reach the second set threshold, operation 911 is executed.

At operation 909, it is determined whether the charging continues.

In case that it is determined that the first voltage value is greater than or equal to the first set threshold, a second control signal is generated, in which the first voltage value is an output voltage value of the supercapacitor switching circuit. In case that it is determined that the first voltage value is greater than or equal to the first set threshold, which is a maximum voltage value at which each supercapacitor in the supercapacitor switching circuit is chargeable, operation 912 is executed.

At operation 910, the supercapacitors are switched to the series connection state.

In case that BOOST discharging is performed, the SERIAL/PARALLEL signal is pulled down (RY1-RY4 are all closed), and the five capacitors are connected in parallel.

When the capacitance voltage is reduced to the maximum conduction duty cycle of the BOOST circuit during the discharge process, that is, when the input voltage value of the power supply of the BOOST circuit is the smallest, it is determined whether the second voltage value is greater than or equal to the second set threshold, a first control signal is generated, and the series connection state is switched (the SERIAL/PARALLEL signal is pulled up). At this time, the voltage Vcap+ is increased to 5 times the original voltage to continue to supply power to the BOOST circuit, thus improving the utilization rate of the capacitance voltage. After the execution is completed, operation 913 is performed.

At operation 911, the supercapacitors are switched to a parallel connection state.

If it is determined the second voltage value is less than the second set threshold, a second control signal is generated to control the switching apparatus to switch to the parallel connection state (the SERIAL/PARALLEL signal is pulled down).

After the execution is completed, operation 913 is performed.

At operation 912, the charging is completed, and the supercapacitors are switched to be connected in parallel.

It is determined that the first voltage value is greater than or equal to the first set threshold, indicating that the charging of each supercapacitor is completed at this time, a second control signal is generated to control the switching apparatus to switch to the parallel connection state (the SERIAL/PARALLEL signal is pulled down).

At operation 913, BOOST discharging is performed.

At operation 914, it is determined whether the discharging continues.

Here, it is possible to determine whether the discharging continues according to the power-consuming device and the current circuit state and to generate indication information to stop the discharging. If the control apparatus acquires the indication information to stop the discharging, the discharging does not continue (No), that is, it is determined that the discharge does not continue, and then operation 902 is executed. If the indication information to stop the discharging is not received, the discharging continues (Yes), that is, operation 908 continues to execute.

In the technical solution provided by the present application example, the serial and parallel connection states of the plurality of capacitors are changed by logically controlled switch devices (such as a relay, an igbt, a mos tube, etc.), which can improve the voltage utilization efficiency of supercapacitors, and accelerate the charging speed.

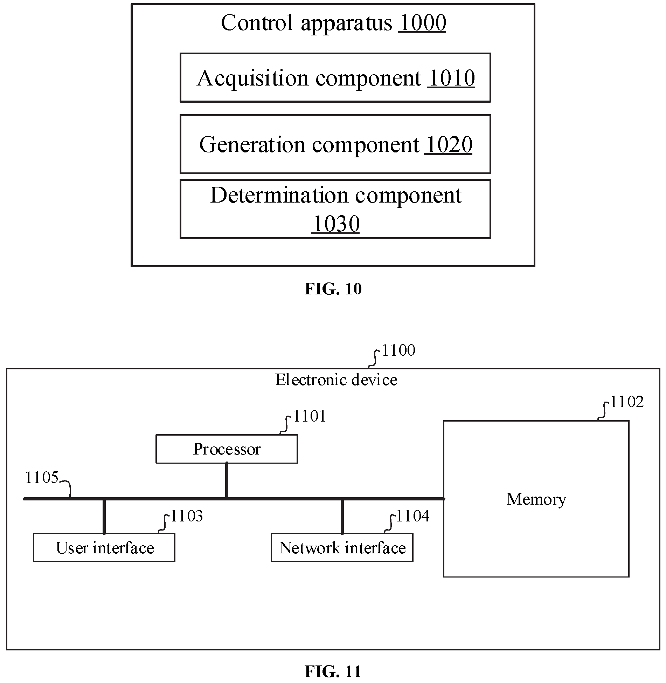

As shown in FIG. 10, the control apparatus 1000 includes an acquisition component 1010 and a generation component 1020. The acquisition component 1010 is configured to acquire the charging indication information. The generation component 1020 is configured to generate a control signal according to the charging indication information and the first set threshold. The control signal is a first control signal configured to control the switching apparatus to switch to the second connection state or a second control signal configured to control the switching apparatus to switch to the first connection state.

In some embodiments, the generation component 1020 is further configured to generate a first control signal according to the charging indication information, and acquire a first voltage value, in which the first voltage value is an output voltage value of the supercapacitor switching circuit. The control apparatus further includes a determination component 1030. The determination component 1030 is further configured to determine that the first voltage value is greater than or equal to the first set threshold, and generate a second control signal, in which the first set threshold is a maximum voltage value at which each supercapacitor in the supercapacitor switching circuit is chargeable.

In some embodiments, the acquisition component 1010 is further configured to acquire discharging indication information, and acquire a second voltage value according to the discharging indication information, in which the second voltage value is an output voltage value of the supercapacitor switching circuit. The determination component 1030 is further configured to determine whether the second voltage value is greater than or equal to a second set threshold. If the second voltage value is greater than or equal to the second set threshold, the first control signal is generated. If the second voltage value is less than the second set threshold, the second control signal is generated. The second setting threshold is a voltage value of the supercapacitor switching circuit corresponding to the maximum duty cycle of the discharging circuit.

In practical applications, the acquisition component 1010, the generation component 1020, and the determination component 1030 may be implemented by a processor in the control apparatus. Certainly, the processor needs to run computer programs in a memory to accomplish its function.

It should be noted that when the control apparatus provided in the embodiments described above performs the controlling, only the division of the program modules described above is used as an example. In practical applications, the processing described above can be allocated to be completed by different program modules as necessary, that is, the internal structure of the apparatus can be divided into different program modules to complete all or part of the processing described above. In addition, the control apparatus provided in the embodiments described above belongs to the same concept as the control method in the embodiments, and the specific implementation process thereof is detailed in the method embodiments, which will not be described again here.

Based on the hardware implementation of the program modules described above, and in order to implement the method of the embodiments of the present application, an embodiment of the present application also provides an electronic device. FIG. 11 shows only an exemplary structure of the electronic device, but not all of the structure thereof, and some or all of the structure shown in FIG. 11 may be implemented as necessary.

As shown in FIG. 11, an electronic device 1100 provided by the embodiment of the present application includes at least one processor 1101, a memory 1102, a user interface 1103, and at least one network interface 1104. The various components in the electronic device 1100 are coupled together by a bus system 1105. It will be appreciated that the bus system 1105 is configured to enable connection communication between these components. The bus system 1105 includes a power bus, a control bus, and a status signal bus in addition to a data bus. However, for clarity of illustration, the various buses are labeled as the bus system 1105 in FIG. 11.

The user interface 1103 may include a display, a keyboard, a mouse, a trackball, a click wheel, a key, a button, a touch pad, a touch screen, or the like.

The memory 1102 in the embodiment of the present application is configured to store various types of data to support the operations of the electronic device. Examples of such data include any computer program operated on the electronic device.

The control method disclosed in the embodiments of the present application may be applied to the processor 1101 or may be implemented by the processor 1101. The processor 1101 may be an integrated circuit chip which has the signal processing capability. In implementation, the operations of the control method may be completed by integrated logic circuits of hardware in the processor 1101 or instructions in the form of software. The processor 1101 described above may be a general purpose processor, a Digital Signal Processor (DSP), other programmable logic devices, discrete gate or transistor logic devices, discrete hardware components, or the like. The processor 1101 may implement or execute the methods, operations, and logical block diagrams disclosed in the embodiments of the present application. The general purpose processor may be a microprocessor or any conventional processor or the like. The operations of the method disclosed in connection with the embodiments of the present application may be directly embodied as execution by a hardware decoding processor, or may be executed by the combination of hardware and software modules in the decoding processor. The software modules may be located in a storage medium located in the memory 1102, and the processor 1101 reads the information in the memory 1102, and completes the operations of the control method provided by the embodiment of the present application in combination with the hardware thereof.

In an exemplary embodiment, the electronic device may be implemented by one or more of an Application Specific Integrated Circuit (ASIC), DSP, a Programmable Logic Device (PLD), a Complex Programmable Logic Device (CPLD), a Field Programmable Gate Array (FPGA), a general purpose processor, a controller, a Micro Controller Unit (MCU), a Microprocessor, or other electronic components to execute the method described above.

It will be appreciated that the memory 1102 may be a volatile or non-volatile memory, and may include a volatile memory and a non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disk, or a Compact Disc Read-Only Memory (CD-ROM). The magnetic surface memory may be a magnetic disk memory or a magnetic tape memory. The volatile memory may be a Random Access Memory (RAM), which serves as an external cache. By way of example, but not limitation, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in embodiments of the present application is intended to include, but is not limited to, these and any other suitable types of memory.

In an exemplary embodiment, an embodiment of the present application also provides a storage medium, that is, a computer storage medium, which may be a computer-readable storage medium, for example, including a memory 1102 storing computer programs. The computer programs described above can be executed by the processor 1101 of the electronic device to complete the operations of the method of the embodiments of the present application. The computer-readable storage medium may be a memory such as a ROM, a PROM, an EPROM, an EEPROM, a Flash Memory, a magnetic surface memory, an optical disk, or a CD-ROM.

It should be noted that the terms "first", "second", and the like are used to distinguish similar objects, and are not necessarily intended to describe a specific order or sequence.

In addition, the technical solutions described in the embodiments of the present application may be arbitrarily combined with each other without conflict.

The above is only specific embodiments of the present application, but the scope of protection of the present application is not limited thereto, and any changes or substitutions that can be easily conceived by those skilled in the art within the technical scope disclosed in the present application should be covered within the scope of protection of the present application. Therefore, the scope of protection of the present application should be based on the scope of protection of the claims.

## Claims

1. An energy storage circuit for a control apparatus of an air conditioner, wherein the control apparatus of the air conditioner comprises a controller and a power supply circuit, the power supply circuit being configured to convert an external power supply and then supply power to the controller, and the energy storage circuit being arranged between an output end of the power supply circuit and a power supply end of the controller, and the energy storage circuit comprises:
a supercapacitor switching circuit, comprising a plurality of supercapacitors and a switching apparatus, wherein the switching apparatus comprises a switching circuit arranged between any two adjacent supercapacitors of the plurality of supercapacitors, and is configured to control the plurality of supercapacitors to switch between a first connection state in which the plurality of supercapacitors are connected in parallel and a second connection state in which the plurality of supercapacitors are connected in series; and
a charging circuit, an output end of the charging circuit being connected to an input end of the supercapacitor switching circuit, the charging circuit being configured to charge each of the plurality of supercapacitors.

2. The energy storage circuit according to claim 1, further comprising:
a discharging circuit, wherein an input end of the discharging circuit is connected to an output end of the supercapacitor switching circuit, and the discharging circuit is configured to boost an output voltage of the supercapacitor switching circuit and then discharge.

3. The energy storage circuit according to claim 1, further comprising:
a current detection control circuit, wherein an output end of the current detection circuit is connected to an input end of the charging circuit, and the current detection circuit is configured to detect a current value of the circuit and generate charging indication information according to the current value, wherein the charging indication information is configured to control turning on of the charging circuit.

4. The energy storage circuit according to claim 1, wherein the switching circuit comprises a switch element comprising:
a first fixed contact and a second fixed contact, wherein the first fixed contact is connected to a first end of a first supercapacitor, and the second fixed contact is connected to a second end of the first supercapacitor; and
a first movable contact, a second movable contact, a third movable contact and a fourth movable contact, wherein the first movable contact is disconnected from a second supercapacitor, the second movable contact and the third movable contact are connected to a first end of the second supercapacitor, and the fourth movable contact is connected to a second end of the second supercapacitor,
wherein:
the second supercapacitor is arranged adjacent to the first supercapacitor; and
the first connection state is a connection state in which the first fixed contact is connected to the second movable contact and the second fixed contact is connected to the fourth movable contact, and the second connection state is a connection state in which the first fixed contact is connected to the first movable contact and the second fixed contact is connected to the third movable contact.

5. A control method applied to the energy storage circuit according to any one of claims 1 to 4, comprising:
acquiring charging indication information; and
generating a control signal according to the charging indication information and a first set threshold,
wherein the control signal is a first control signal configured to control the switching apparatus to switch to the second connection state or a second control signal configured to control the switching apparatus to switch to the first connection state.

6. The method according to claim 5, wherein said generating the control signal according to the charging indication information and the first set threshold comprises:
generating the first control signal according to the charging indication information and acquiring a first voltage value, wherein the first voltage value is an output voltage value of the supercapacitor switching circuit; and
determining that the first voltage value is greater than or equal to the first set threshold, and generating the second control signal,
wherein the first set threshold is a maximum voltage value at which each of the plurality of supercapacitors in the supercapacitor switching circuit is chargeable.

7. The method according to claim 5, further comprising:
acquiring discharging indication information;
acquiring a second voltage value according to the discharging indication information, wherein the second voltage value is an output voltage value of the supercapacitor switching circuit;
determining whether the second voltage value is greater than or equal to a second set threshold, and generating the first control signal if the second voltage value is greater than or equal to the second set threshold; and
generating the second control signal if the second voltage value is less than the second set threshold,
wherein the second set threshold is a voltage value of the supercapacitor switching circuit corresponding to a maximum duty cycle of the discharging circuit.

8. A control apparatus applied to the supercapacitor control circuit according to any one of claims 1 to 4, comprising:
an acquisition component configured to acquire an operation parameter value of the energy storage circuit in an operation mode, the operation mode comprising a charging mode; and
a generation mode configured to generate a control signal according to the operation parameter value in the charging mode and a first set threshold,
wherein the control signal is a first control signal configured to control the switching apparatus to switch to the second connection state or a second control signal configured to control the switching apparatus to switch to the first connection state.

9. An electronic device, comprising:
the energy storage circuit according to claims 1 to 4;
a processor; and
a memory for storing computer programs executable on the processor,
wherein the processor is configured to execute steps of the method according to any one of claims 5 to 7 when running the computer programs.

10. A computer storage medium having stored thereon computer programs, wherein the computer programs, when executed by a processor, perform steps of the method according to any one of claims 5 to 7.
